# EUROPÄISCHE PATENTSCHRIFT

(11) **EP 0 486 473 B1**
(45) Veröffentlichungstag und Bekanntmachung des Hinweises auf die Patenterteilung: **28.09.1994**
(21) Anmeldenummer: 92102544.1
(22) Anmeldetag: 03.06.1987
(51) Int. Cl.: A01B 49/06, A01B 29/06

(54) **Vorrichtung zur landwirtschaftlichen Bodenbearbeitung**
Agricultural soil conditioning device
Machine agricole de préparation du sol

(30) Priorität: 22.07.1986 DE 3624784
(43) Veröffentlichungstag der Anmeldung: 20.05.1992
(62) Teilanmeldung aus: 87108000.8
(73) Patentinhaber: KUHN S.A., F-67706 Saverne Cedex (FR)
(72) Erfinder: Kemmner, Hartmut, W-7411 Unterensingen (DE)
(74) Vertreter: Kratzsch, Volkhard, Dipl.-Ing.

(56) Entgegenhaltungen:
- EP-A- 0 201 785
- DE-A- 3 420 102
- FR-A- 2 488 768
- GB-A- 667 904
- US-A- 3 392 791
- US-A- 4 509 438

## Beschreibung

Die vorliegende Erfindung betrifft eine Vorrichtung zur landwirtschaftlichen Bodenbearbeitung mit einer Saatrohre aufweisenden Saateinbringeinrichtung und mit einer mit rotierenden, vorstehenden Mitnehmern versehenen walzenförmigen Vorrichtung.

In der nicht vorveröffentlichten EP-A-0 201 785 ist eine Vorrichtung zur landwirtschaftlichen Bodenbearbeitung beschrieben mit einer den Boden auf- bzw. umbrechenden Werkzeuganordnung, insbesondere einem Zinkenrotor, mit einer dahinter arbeitenden Packer- und Krümlerwalze, und mit einer saatgut-Austragsvorrichtung. Die Packer- und Krümlerwalze besitzt einen geschlossenen, kreiszylindrischen Mantel, auf dem Zähne jeweils reihenförmig in Radialebenen der Walze angeordnet sind. Am Rahmen des Zinkenrotors ist die Saatgut-Austragsvorrichtung abgestützt. Diese besitzt einen Saatgutbehälter mit einer Verteilvorrichtung, welche das Saatgut auf eine Vielzahl von Zuführleitungen verteilt, die ihrerseits zu saatgutauslaufrohren mit Auslaufmündungen führen. Die Saatauslaufrohre bzw. deren die Auslaufmündungen aufweisenden Endstücke sind tangential zur Achse der Packer- und Krümlerwalze jeweils innerhalb des Abstandsraumes benachbarter Zahnreihen der Walze angeordnet. Dadurch soll erreicht werden, dass an den Saatauslaufrohren kein langsträhniges Pflanzengut oder dgl. hängenbleiben kann. Im übringen sind die Saatauslaufrohre höhenverstellbar angeordnet.

In einer bevorzugten Ausführungsform dieser Vorrichtung zur landwirtschaftlichen Bodenbearbeitung ist ebenfalls vorgesehen, dass die Rohre mit federbarkeit in Gerätelängsrichtung derart angeordnet sind, dass sie zur Walze oder zum Zinkenrotor hin ausweichen bzw. ausschwenken können. Dadurch soll auch noch erreicht werden, dass die Rohre ausweichen bzw. ausschwenken können, wenn vom Rotor Steine gegen die Rohre geschleudert werden oder wenn vom Rotor hochgeschleuderte Steine in den engen Abstandsraum zwischen dem Walzenmantel und den Rohren fallen.

Bei dieser Vorrichtung zur landwirtschaftlichen Bodenbearbeitung sollen die Saatrohre von den durch die zwischen den einzelnen Saatrohren vorhandenen Zwischenraumbereiche durchgreifende und direkt an den Saatrohren vorbeilaufende Zähne der Packer- und Krümlerwalze ständig von etwaigem Pflanzengut, das in den Bereich vor den Saatrohren gelangt, befreit werden. Bei relativ tiefer Einstellung der Saatrohre könnte es jedoch vorkommen, dass Pflanzengut, welches sich am unteren Ende der Saatrohren anhäuft, von den Zähnen der Packer- und Krümlerwalze nicht mehr entfernt werden kann. Bei einer bevorzugten Ausführungsform dieser Vorrichtung ist es zwar vorgesehen, dass die Saatrohre mit federbarkeit ausweichen bzw. ausschwenken können. Diese zugelassene Bewegung der Saatrohre erfolgt jedoch in Gerätelängsrichtung, d.h. etwa in horizontaler Richtung, was in den meisten Fällen ein Entfernen des am unteren Ende der Saatrohre hängende Pflanzengut kaum erlauben dürfte, um so mehr, dass -bezogen auf die Arbeitsrichtung- die Bewegung der Saatrohre nach hinten, d.h. zur Packer- und Krümlerwalze hin, aufgrund der nahe Anordnung der Packer- und Krümlerwalze notwendigerweise begrenzt ist.

Desweiteren kann diese Saateinbringeinrichtung nur arbeiten, wenn sie hinter einer einen Erdstrom bildenden Werkzeuganordnung, insbesondere einem Zinkenrotor, angeordnet ist.

Der vorliegenden Erfindung liegt die Aufgabe zugrunde, eine Vorrichtung zur landwirtschaftlichen Bodenbearbeitung mit einer Saatrohre aufweisenden Saateinbringeinrichtung und mit einer mit rotierenden, vorstehenden Mitnehmern versehenen walzenförmigen Vorrichtung zu schaffen, die weitgehend verstopfungsfrei auch auf solche mit Pflanzen und/oder Ernterückständen besetzte und/oder feuchte, klebrige Böden arbeiten kann.

Zur Lösung dieser Aufgabe schlägt die Erfindung eine Vorrichtung zur landwirtschaftlichen Bodenbearbeitung vor, mit einer Saatrohre aufweisenden Saateinbringeinrichtung und mit einer quer zur Arbeitsrichtung verlaufenden, mit rotierenden, vorstehenden Mitnehmern versehenen walzenförmigen Vorrichtung, deren vorstehende Mitnehmer durch die zwischen den einzelnen Saatrohren vorhandenen Zwischenraumbereiche durchgreifen und direkt an den Saatrohren vorbeilaufen, wobei
a. jedes, vorzugsweise jedes einzelne, Saatrohr zur Höhenbewegung seines unteren Endes gegen die Wirkung einer Federeinrichtung ausweichbar, vorzugsweise schwenkbar, gehalten ist, und
b. jedes einzelne Saatrohr-bezogen auf die Arbeitsrichtungin seinem unteren Bereich stark schräg nach hinten unten verläuft.

Da die Mitnehmer der walzenförmigen Vorrichtung der erfindungsgemässen Vorrichtung zur landwirtschaftlichen Bodenbearbeitung durch die zwischen den einzelnen Saatrohren vorhandenen Zwischenraumbereiche hindurchgreifen und direkt an den Saatrohren vorbeilaufen, ist eine ständige Reinigung und Sauberhaltung der Saatrohre gewährleistet. Sowohl etwaige Pflanzen und/oder Ernterückstände, die sich sonst dort ansammeln könnten, als auch etwaige Erdklumpen, Steine, Stroh oder dergleiche Unrat und, insbesondere bei feuchtem Wetter, feuchter klebriger Boden werden durch die durch die Saatrohre hindurchgreifenden Mitnehmer herausgedrückt, wodurch die Saatrohre davon freigehalten werden.

Da jedes, vorzugsweise jedes einzelne, Saatrohr zur Höbenbewegung seines unteren Endes gegen die Wirkung einer Federeinrichtung ausweichbar, vorzugsweise schwenkbar, gehalten ist, können die Saatrohre, vorzugsweise jedes einzelne Saatrohr, etwaigen Ernterückstände, die sich an ihrem unteren Ende suchen anzusammeln, federelastisch ausweichen. Die Saatrohre können auch etwaigen Hindernissen, wie Steine oder dergleichen federelastisch ausweichen.

Jedes einzelne Saatrohr verlaüft auch -bezogen auf die Arbeitsrichtung- in seinem unteren Bereich stark schräg nach hinten unten. Dadurch ergibt sich, dass das Saatrohr besonders gut über oben erwähnten Ernterückständen oder Hindernissen gleiten kann.

Diese Merkmale sichern einen störungsfreien Betrieb beim Säen und ermöglichen ein besonders gutes Einbringen des Saatgutes in das Erdreich.

Weitere vorteilhafte Ausgestaltungen der Erfindung sind in den Unteransprüche enthalten.

Gemäss Anspruch 2 ist es vorgesehen, dass jedes, vorzugsweise jedes einzelne, Saatrohr im Bereich der walzenförmigen Vorrichtung ausweichbar, vorzugsweise schwenkbar, gehalten ist.

Gemäss Anspruch 3 ist jedes, vorzugsweise jedes einzelne, Saatrohr mittels eines zur Längsrichtung der walzenförmigen Vorrichtung zumindest etwa parallelen Gelenkes schwenkbar gehalten. Dieses Gelenk kann sich etwa in Höhe einer Drehlängsachse der walzenförmigen Vorrichtung erstrecken (Anspruch 4).

Die gefederte Halterung jedes, vorzugsweise jedes einzelnen, Saatrohres weist gemäss Anspruch 5 eine Zugfeder auf.

Gemäss Anspruch 6 sind die Saatrohre in der Halterung der walzenförmigen Vorrichtung mittelbar gehalten.

Die Saateinbringeinrichtung kann einen Halterahmen aufweisen, an welchem jedes, vorzugsweise jedes einzelne, Saatrohr gegen die Wirkung einer Feder ausweichbar, vorzugsweise schwenkbar, gehalten ist (Anspruch 7).

Erfindungsgemäss kann gemäss Anspruch 8 jedes einzelne Saatrohr an seinem unteren Ende mit einem Schar versehen sein.

Anspruch 9 sieht vor, dass die walzenförmige Vorrichtung zur Höhenführung der Saateinbringeinrichtung ausgebildet ist, wobei letztere gegenüber der walzenförmigen Vorrichtung mittels einer Verstelleinrichtung höhenverstellbar sein kann (Anspruch 10).

Anspruch 11 sieht vor, dass die Mitnehmer entlang der walzenförmigen Vorrichtung in gleich grossen Abständen aufeinanderfolgen.

Gemäss Anspruch 12 sind je Axialbereich an der walzenförmigen Vorrichtung mehrere Mitnehmer angeordnet, die sich vorzugsweise in einer gemeinsamen Radialebene erstrecken (Anspruch 13) und in Umfangsrichtung in gleich grossen Winkelabständen aufeinanderfolgen (Anspruch 14). Erfindungsgemäss können je Axialbereich, die Mitnehmer auch zu einem Mitnehmerrad zusammengefasst sein (Anspruch 15).

Gemäss Anspruch 16 ist es vorgesehen, dass in Längsrichtung der walzenförmigen Vorrichtung gesehen, die entsprechende Mitnehmer in zwei aufeinanderfolgende Axialbereiche der walzenförmigen Vorrichtung gegeneinander versetzt sind.

Es ist von besonderem Vorteil wenn die Mitnehmer, gemäss Anspruch 17, je einen Endabschnitt aufweisen, der entgegen ihre Umlaufrichtung gerichtet ist. Diesbezüglich können die Mitnehmer gegen ihre Umlaufrichtung gekröpft, gebogen oder abgewinkelt sein (Anspruch 18). Gemäss einer bevorzugten Ausführung weisen die Mitnehmer je einen inneren Abschnitt und einen an diesen Abschnitt anschliessenden, demgegenüber entgegen der Umlaufrichtung der Mitnehmer unter einem stumpfen Winkel abgebogenen äusseren Endabschnitt auf (Anspruch 19).

Es ist bevorzugt vorgesehen, dass die Mitnehmer derart rotieren, dass sie sich an der Vorderseite der walzenförmigen Vorrichtung gegen den Boden bewegen (Anspruch 20).

Gemäss Anspruch 21 sind die Mitnehmer aus Metall oder Kunststoff gebildet und können auf der Aussenseite mit einem elastischen Material, insbesondere mit Gummi oder Kunststoff, beschichtet werden (Anspruch 22).

Anspruch 23 sieht vor, dass jeder Mitnehmer aus elastisch federndem Material gebildet und/oder an der walzenförmigen Vorrichtung federnd gehalten ist. Dies kann ebenfalls zur verstopfungsfreien Arbeit der Vorrichtung zur landwirtschaftlichen Bodenbearbeitung beitragen.

Gemäss einer vorteilhafter Ausgestaltung sind die Mitnehmer als Zinken ausgebildet (Anspruch 23).

Die walzenförmige Vorrichtung kann eine die vorstehenden Mitnehmer haltende Walze aufweisen (Anspruch 25). Die Saatrohre erstrecken sich dann bevorzugt -bezogen auf die Arbeitsrichtung- vor der Walze (Anspruch 26). Auch kann die Lage der Walze gegenüber der Saatrohre einstellbar sein (Anspruch 27).

Weitere Einzelheiten und Vorteile der Erfindung ergeben sich aus der nachfolgenden Beschreibung, in welcher die Erfindung anhand von in den Zeichnungen gezeigten, nicht einschränkenden Ausführungsbeispielen näher erläutert wird. Es zeigen:
- Fig. 1: eine schematische, teilweise geschnittene stirnseitige Ansicht einer erfindungsgemäßen Vorrichtung zur landwirtschaftlichen Bodenbearbeitung gemäß einem ersten Ausführungsbeispiel,
- Fig. 2: einen schematischen, axialen Längsschnitt von Teilen der Vorrichtung in Fig. 1,
- Fig. 3: einen schematischen, axialen Längsschnitt etwa entsprechend demjenigen in Fig. 2 eines Teiles einer erfindungsgemäßen Vorrichtung gemäß einem zweiten, abgewandelten Ausführungsbeispiel,
- Fig. 4: einen schematischen, axialen Längsschnitt etwa entsprechend demjenigen in Fig. 3 eines dritten Ausführungsbeispieles,
- Fig. 5: eine schematische, teilweise geschnittene Seitenansicht einer Verstellspindel mit Überlastsicherung der Vorrichtung in Fig. 1, und
- Fig. 6: eine schematische,teilweise geschnittene stirnseitige Ansicht einer erfindungsgemäßen Vorrichtung zur landwirtschaftlichen Bodenbearbeitung gemäß einem vierten Ausführungsbeispiel.

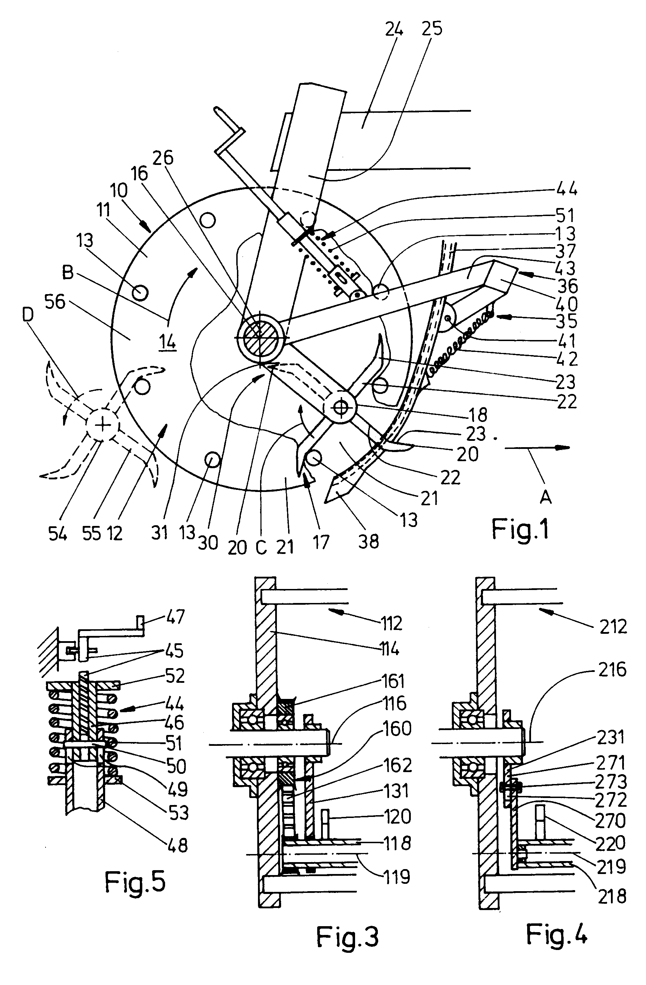

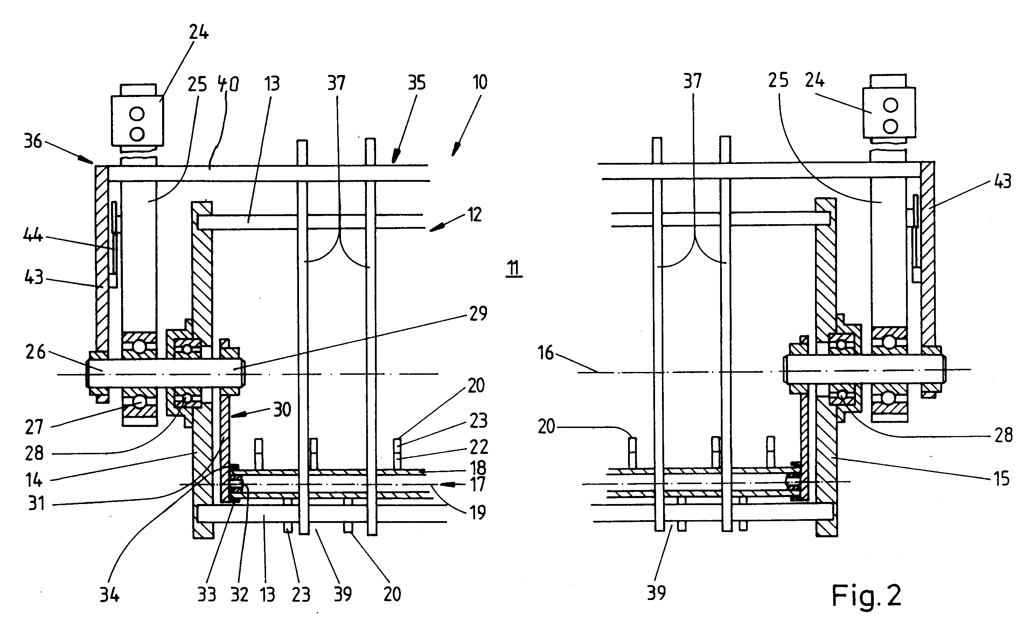

In Fig. 1 und 2 ist eine Vorrichtung zur landwirtschaftlichen Bodenbearbeitung gezeigt, die eine Saateinbringeinrichtung (35) und eine mit rotierenden Mitnehmern( 20 ) versehene walzenförmige Vorrichtung (10,11,18) aufweist. Diese Vorrichtung zur landwirtschaftlichen Bodenbearbeitung kann z.B. hinter einem von einem Traktor gezogenen Bodenbearbeitungsgerät geführt werden.

In diesem Ausführungsbeispiel besitzt die walzenförmige Vorrichtung (10,11,18) zuerst einen Krumenpacker (11), der einen etwa walzenförmigen Körper (12) aufweist, dessen Mantelfläche durch etwa achsparallele Längsstäbe (13) gebildet ist, die in Umfangsrichtung in z.B. gleich großen Abständen aufeinander folgen. An beiden Enden weist der Körper (12) stirnseitige Abschlußscheiben (14,15) auf. Entlang der Längsmittelachse (16) folgen in bestimmten Abständen Ringscheiben, die der Radialabstützung der Längsstäbe (13) und der Verfestigung des Körpers (12) dienen und der besseren Übersicht wegen in Fig. 1 und 2 nicht besonders gezeigt sind.

Die walzenförmige Vorrichtung (10,11,18) weist auch eine Walze (18) auf, die im Inneren des Körpers (12) angeordnet ist. Die Walze (18) besteht, wie gezeigt, z.B. aus einem Rohr oder statt dessen aus Vollmaterial. Als Material dafür kommen insbesondere Metall oder auch Kunststoff in Betracht, auch diese Materialien, beschichtet mit Gummi oder Kunststoff. Die Walze (18) ist innerhalb des Körpers (12) um eine zu dessen Längsmittelachse (16) zumindest im wesentlichen parallel verlaufende Achse (19) drehbar gelagert. Sie weist entlang der Achse (19) in z.B. gleich großen Abständen aufeinanderfolgende vorstehende Mitnehmer (20) auf. Die Relativlage der Walze (18) in bezug auf die Längsmittelachse (16) und das Radialmaß der einzelnen Mitnehmer (20) sind so gewählt, daß die Mitnehmer (20) beim Umlauf der Walze (18) jeweils durch die Zwischenraumbereiche (21) zwischen zwei beim Umlauf des Körpers (12) aufeinanderfolgenden Längsstäben (13) hindurchgreifen. Dies ist für zwei Mitnehmer (20) bei der Stellung in Fig. 1 zu sehen. Wie ersichtlich, ist die Walze (18) dabei, betrachtet in Arbeitsrichtung gemäß Pfeil A, im der Längsmittelachse (16) vorgelagerten vorderen und dabei zugleich unteren Quadranten des Körpers (12) und dabei etwa im Bereich der Winkelhalbierenden dieses Quadranten, angeordnet.

Bei der Arbeitsrichtung gemäß Pfeil A, in der die Vorrichtung zur landwirtschaftlichen Bodenbearbeitung mittels des nicht gezeigten Traktors vorwärtsgeschleppt wird, läuft der Körper (12) im Uhrzeigersinn gemäß Pfeil B um die Längsmittelachse (16) um. Die Walze (18) läuft damit gleichsinnig um, d.h. ebenfalls im Uhrzeigersinn gemäß Pfeil C.

Beim gezeigten Ausführungsbeispiel bestehen die Mitnehmer (20) jeweils aus Zinken, die aus elastisch federndem und nachgiebigem Material gebildet und/oder federnd an der Walze (18) gehalten sind. Dafür kommen Metall oder Kunststoff in Betracht, auch diese Materialien außen mit Gummi, Kunststoff oder dergl. beschichtet.

Wie man aus Fig. 1 und 2 erschließt, sind beim gezeigten Ausführungsbeispiel in Längsrichtung der Walze (18) gesehen jeweils einzelne Zinken (20) vorhanden, die längs der Walze (18) in vorzugsweise gleich großen Abständen aufeinander folgen. An jeder Stelle sitzt an der Walze (18) dabei also lediglich ein Zinken (20). Diese Zinken (20) sind, in Umfangsrichtung der Walze (18) betrachtet, gegeneinander versetzt, wodurch sich die in Fig. 1 in der Stirnansicht sternförmige Konfiguration ergibt. Bei dieser Anordnung erstrecken sich längs der Walze (18) einige der Zinken (20) immer durch Zwischenraumbereiche (21) zwischen zwei Längsstäben (13) des Körpers (12).

Bei einem anderen, nicht gezeigten Ausführungsbeispiel sind statt dessen je Axialbereich an der Walze (18) gleich mehrere derartige Mitnehmer (20) angeordnet, die sich dann in einer gemeinsamen Radialebene erstrecken und in diesem Axialbereich in Umfangsrichtung z.B. in gleich großen Winkelabständen aufeinanderfolgen. Diese Mitnehmer können dann auch zu einem Rad je Axialbereich zusammengefaßt sein.

Die Walze (18) ist zwangsangetrieben. Ihr Antrieb erfolgt hier vom Körper (12) her. Dafür sind einige der Zinken (20) der Walze (18) als Getriebezähne ausgebildet und/oder wirksam, wobei diese radial über den von den Längsstäben (13) umschriebenen Umfangskreis des Körpers (12) hinausreichen derart, daß bei der Umlaufdrehbewegung des Körpers (12) im Uhrzeigersinn gemäß Pfeil B die Walze (18) nach Art einer Triebstockverzahnung von den Längsstäben (13) ebenfalls im Uhrzeigersinn gemäß Pfeil C zwangsangetrieben wird. Dabei läuft die Walze (18) mit vom Zähnezahlverhältnis bestimmter, z.B. mehrfach höherer Drehzahl als der Körper (12) um. Der Umlauf geschieht dadurch, daß immer zumindest ein als Getriebezahn ausgebildeter Zinken (20) in Antriebsrichtung gemäß Pfeil B von einem Längsstab (13) bei dessen Umlaufbewegung vorwärtsgeschoben wird, wobei sich dieser Getriebezinken (20) aus dem Zwischenraumbereich (21) herausbewegt, während bei der Umlaufbewegung der Walze (18) zumindest ein anderer Getriebezinken (20) in den nächstfolgenden Zwischenraumbereich (21) hineinbewegt wird,und zwar bevor bei der Umlaufbewegung des Körpers (12) der nächste Längsstab (13) in den Bereich der Rückseite dieses anderen Getriebezinkens (20) gelangt.

Die Zinken (20) sind gegen ihre Umlaufrichtung gemäß Pfeil C gebogen, abgeknickt oder sonstwie gekröpft. Beim gezeigten Ausführungsbeispiel weist jeder Zinken (20) einen von der Walze (18) ausgehenden Abschnitt (22) auf, und ferner einen an diesen Abschnitt (22) anschließenden Endabschnitt (23). Der Endabschnitt (23) schließt an den Abschnitt (22) dort an, wo etwa der von den Längsstäben (13) umschriebene Umfangskreis verläuft, und ist dem Abschnitt (22) gegenüber gegen die Umlaufrichtung gemäß Pfeil C unter einem stumpfen Winkel abgebogen. Das Radialmaß der Zinken (20) ist so bemessen, daß diese mit ihrem freien Ende, das hier als Spitze am Ende des Endabschnittes (23) ausgebildet ist, über den äußeren Hüllkreis des Körpers (12) hinaus vorstehen, wie Fig. 1 zeigt.

Für die Lagerung der walzenförmigen Vorrichtung (10,11,18) sind an einer Halterung (24) beidseitig abstrebende Haltearme (25) vorgesehen, die jeweils einen Achsstummel (26) tragen, der im zugeordneten Haltearm (25) mittels eines Wälzlagers (27) oder eines nicht gezeigten Gleitlagers drehbar gelagert ist. Auf dem jeweils zugewandten Teil des Achsstummels (26) ist der Körper (12) mittels eines Wälzlagers (28) oder eines nicht gezeigten Gleitlagers frei drehbar gelagert, das an oder in der Abschlußscheibe (14,15) gehalten und nach außen hin gegen Eindringen von Schmutz abgedeckt ist. Die Achsstummel (26) ragen mit ihrem Endabsatz (29) axial in das Innere des Körpers (12) hinein. An diesem Endabsatz (29) ist drehfest eine allgemein mit (30) bezeichnete Tragvorrichtung gehalten, an der die Walze (18) frei drehbar gelagert ist. Die Tragvorrichtung (30) besteht jeweils aus einem radial verlaufenden Tragteil (31). Der Tragteil (31) hat z.B. die Form einer Strebe. Er kann in nicht weiter gezeigter Weise abgefedert sein oder er ist bei einem anderen Ausführungsbeispiel gleich als Blattfeder ausgebildet, die selbst ein federndes Verhalten hat. Zur Lagerung der Walze (18) sitztdrehfest an jedem Tragteil (31) ein Lagerzapfen (32), auf dem die Walze (18) z.B. über ein dazwischengefügtes Gleitlager (33) drehbar gelagert ist. Der Tragteil (31) sitzt auf dem Endabsatz (29) des zugeordneten Achsstummels (26), wobei, obwohl nicht weiter gezeigt, die Möglichkeit besteht, mittels herkömmlicher Verstellmittel die bleibende, um die Längsmittelachse (16) geschwenkte Lage der Walze (18) einstellen und feststellen zu können.

Bei einem anderen, nicht gezeigten Ausführungsbeispiel sitzen die Lagerzapfen (32) direkt an der Walze (18) und sind am zugeordneten Tragteil (31) drehbar gelagert.

An jedem Ende der Walze (18) ist ein Schutzring (34) vorgesehen, der die dortige endseitige Lagerstelle der Walze (18) umgibt und nach außen hin abdeckt und schützt, so daß ein etwaiges Eindringen von Schmutz von außen her in die Lagerung der Walze (18) verhindert ist.

Nicht weiter gezeigt ist, daß die Achsstummel (26) federnd an den Haltearmen (25) gehalten sein können, wozu z.B. die Haltearme (25) ihrerseits federnd an der Halterung (24) angebracht werden können.

Bei einem anderen, nicht gezeigten Ausführungsbeispiel bestehen die Mitnehmer (20) aus Scheiben oder statt dessen aus Walzenstücken. Die Walzenstücke bestehen z.B. aus elastischem Material, z.B. aus Kunststoff oder Gummi.

Wird die Vorrichtung zur landwirtschaftlichen Bodenbearbeitung von einem Traktor in Arbeitsrichtung gemäß Pfeil A geschleppt, so rollt die walzenförmige Vorrichtung (10,11, 18) auf dem Boden ab.

Die Saateinbringeinrichtung (35) weist einen Halterahmen (36) und daran gehaltene Saatrohre (37) auf, die endseitig Schare (38) tragen. Die Saatrohre (37) sind, in Arbeitsrichtung gemäß Pfeil A betrachtet, vor dem Körper (12) und der Walze (18) und dabei so angeordnet, daß die vorstehenden Mitnehmer in Form der Zinken (20) an der Walze (18) die zwischen den einzelnen Saatrohren (37) vorhandenen Zwischenraumbereiche (39) durchgreifen. Diesen Durchgriff erkennt man in Fig. 1 beim dort rechts abstehenden Zinken (20). In Fig. 1 erkennt man auch, daß die Saatrohre (37) gebogen sind, und zwar zumindest im wesentlichen dem Bogenverlauf des Körpers (12) angepaßt. Bei einem anderen, nicht gezeigten Ausführungsbeispiel sind die Saatrohre (37) statt dessen noch stärker gebogen. Der Halterahmen (36) weist z.B. einen etwa achsparallelen Träger (40) auf, an dem die einzelnen Saatrohre (37) gefedert gehalten sind. Aus Fig. 1 ist ersichtlich, daß die Saatrohre (37) am Träger (40) im Bereich des jeweils zugeordneten, zur Achse (19) der Walze (18) parallelen Gelenkes (41) schwenkbar gehalten und mittels jeweils einer Zugfeder (42) demgegenüber noch federnd gehalten sind. Aufgrund dieser Federung können die Saatrohre (37) etwaigen Hindernissen, wie Steinen, Wurzeln oder dergl., federelastisch ausweichen. Der Halterahmen (36) weist an beiden Enden jeweils eine Haltestrebe (43) auf, die jeweils am zugeordneten Achsstummel (26) gehalten ist. Dabei sind die Haltestreben (43) in vorgegebener Umfangsrichtung der Saatrohre (37), bezogen auf die Walze (18) mit den vorstehenden Zinken (20), drehfest mit dem jeweils zugeordneten Achsstummel (26) verbunden, derart, daß die Saatrohre (37) und die Walze (18) mit den Zinken (20) in bleibender Relativausrichtung gehalten sind, wobei sie unter Beibehaltung und Sicherung dieser Relativausrichtung gemeinsam verstellbar sind. Dadurch ist sichergestellt, daß bei einer Verstellung die durchgreifenden Zinken (20) der Walze (18) immer in Höhe der Schare (38) bleiben und damit immer die durchgreifende Wirkung durch den Zwischenraumbereich (39) zwischen den einzelnen Saatrohren (37) und endseitigen Scharen (38) gewährleistet ist.

Die mit den beidseitigen Achsstummeln (26) drehfeste Einheit aus Walze (18) mit Zinken (20) sowie aus Halterahmen (36) mit Saatrohren (37) ist um die Längsmittelachse (16) in Umfangsrichtung relativ zu den die Achsstummel (26) drehbar tragenden Haltearmen (25) verstellbar und feststellbar. Hierzu dient eine Verstelleinrichtung (44) zwischen dem Haltearm (25) einerseits und der Haltestrebe (43) andererseits. Die Verstelleinrichtung (44) ist im Detail in Fig. 5 gezeigt. Sie weist im einzelnen eine Verstellspindel auf, die in herkömmlicher Weise aus einer Gewindespindel (45) und einer mit Innengewinde versehenen und die Gewindespindel (45) aufnehmenden Spindelhülse (46) besteht. Die Gewindespindel (45) ist endseitig mit einer Kurbel (47) versehen und drehbar, jedoch axial unverschiebbar, z.B. am Haltearm (25) gelagert. Die Spindelhülse (46) taucht in ein Verstellrohr (48) ein, das ein achsparalleles Langloch (49) aufweist. Die Spindelhülse (46) ist mit einem querverlaufenden Stift (50) versehen, der in das Langloch (49) eingreift.

Zwischen dem gesamten Halterahmen (36) mitsamt den Saatrohren (37) und dem Haltearm (25) befindet sich als Überlastsicherung zumindest eine Feder (51), die hier als Druckfeder und dabei als zylindrische Schraubenfeder ausgebildet ist und die es möglich macht, den gesamten Halterahmen (36) mitsamt den Saatrohren (37) um die Achse (16) im Gegenuhrzeigersinn, d.h. gegensinnig zur Umlaufrichtung gemäß Pfeil B, zumindest in Grenzen zu schwenken. Auf diese Weise können die Saatrohre (37) mit endseitigen Scharen (38) etwaigen Hindernissen, wie Steine, Wurzeln oder dergl., zusätzlich ausweichen. Die Feder (51) greift beim gezeigten Ausführungsbeispiel an der Verstellspindel der Verstelleinrichtung (44) an. Sie ist zwischen der Spindelhülse (46) einerseits und dem Verstellrohr (48) andererseits wirksam. Beide tragen Abstützglieder (52) bzw. (53) in Form von Querstiften, Tellern oder dergl., an denen sich die zugewandten Enden der Feder (51) abstützen.

Da die Zinken (20) der Walze (18) durch die Zwischenraumbereiche (39) zwischen den einzelnen Saatrohren (37) mit endseitigen Scharen (38) hindurchgreifen, ist eine Reinigung und Sauberhaltung der Saatrohre (37) und endseitigen Schare (38) gewährleistet. Sowohl etwaige Ernterückstände, die sich sonst dort ansammeln könnten, als auch etwaige Erdklumpen, Steine, Stroh oder dergl. Unrat, und insbesondere bei feuchtem Wetter feuchter klebriger Boden, werden durch die durch die Saatrohre (37) hindurchgreifenden Zinken (20) herausgedrückt, wodurch die Saatrohre (37) und endseitigen Schare (38) davon freigehalten werden.

Bei einem anderen, nicht gezeigten Ausführungsbeispiel besteht die Verstelleinrichtung aus Lochschienen, die jeweils an dem zugeordneten Haltearm (25) befestigt sind. Die Lochschienen erstrecken sich vom Haltearm (25) in Richtung zur Haltestrebe (43), die z.B. Stifte oder dergl. Verriegelungsteile tragen, die in das je nach Schwenkstellung gewünschte Loch der Lochschiene eingreifen.

Eine weitere Besonderheit der Vorrichtung ist in Fig. 1 gestrichelt angedeutet und besteht in einer in Arbeitsrichtung gemäß Pfeil A hinter dem Körper (12) und außerhalb dieses drehbar gehaltenen Zustreichwalze (54). Diese ist vom Körper (12) zwangsangetrieben. Die Zustreichwalze (54) weist vorstehende Mitnehmer (55) ähnlich den Mitnehmern (20) auf, die beim gezeigten Ausführungsbeispiel ebenfalls als Zinken ausgebildet sind. Diese sind, wie bei der Walze (18), in Längsrichtung der Zustreichwalze (54) z.B. in gleichmäßigen Abständen aufeinanderfolgend angeordnet. Alle Zinken (55) oder zumindest einige davon sind hinsichtlich ihrer Radialerstreckung derart bemessen, daß sie von außen her die Zwischenraumbereiche (56) zwischen zwei aufeinanderfolgenden Längsstäben (13) des Körpers (12) durchgreifen können. Einige der Zinken (55) der Zustreichwalze (54) sind, wie bei der Walze (18), als Getriebezähne ausgebildet, wobei sie radial in den von den Längsstreben (13) umschriebenen Umfangskreis des Körpers (12) von außen hineinreichen derart, daß bei der Umlaufbewegung des Körpers (12) die Zustreichwalze (54) nach Art einer Triebstockverzahnung von den Längsstäben (13) des Körpers (12) angetrieben ist. Dabei läuft die Zustreichwalze (54) gemäß Pfeil D im Gegenuhrzeigersinn und somit gegensinnig zur Drehrichtung des Körpers (12) um. Die Zinken (55), die als Getriebezähne fungieren, sind in sich starr und/oder starr an der Zustreichwalze (54) gehalten, während alle übrigen Zinken (55) in sich federnd und/oder federnd an der Zustreichwalze (54) gehalten sind. Die Zinken (55) sind auch gegen die Umlaufrichtung gemäß Pfeil D gekröpft, gebogen oder abgewinkelt, wie Fig. 1 zeigt. Die besondere Halterung der Zustreichwalze (54), mit der diese drehbar am gesamten Gestell gelagert ist, ist nicht besonders hervorgehoben. Mittels der Zustreichwalze (54) ist es möglich, das zuvor über die Saatrohre (37) zugeführte Saatgut im mechanischen Betrieb zu bedecken. Außerdem wird gleichzeitig über die Zustreichwalze (54) noch eine Außenreinigung des Krumenpackers (11) bewirkt. Durch die federelastischen Zinken (55) wird ein optimales Zustreichen der Saatfurchen erreicht, mit einhergehender Außenreinigung des Krumenpackers (11).

Bei dem in Fig. 3 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Gemäß Fig. 3 ist die Walze (118), die die Mitnehmer (120) in Form von Zinken trägt, mit dem Körper (112) über ein Getriebe (160) gekuppelt, über das die Umlaufbewegung des Körpers (112) in eine dazu gleichsinnige Antriebsdrehbewegung der Walze (118) umgeformt wird. Das Getriebe (160) besteht hier z.B. aus einem Riemengetriebe mit an der Abschlußscheibe (114) des Körpers (112) befestigter Riemenscheibe (161) und einem Antriebsriemen (162), der über die Riemenscheibe (161) und ferner über die Walze (118) geführt ist und beide getrieblich koppelt.

Es versteht sich, daß das Getriebe (160) auch anders ausgebildet sein kann, z.B. als Kettengetriebe, Reibradgetriebe, Zahnradgetriebe oder dergl., wobei auch die Anordnung des Getriebes an anderer Stelle sitzen kann, soweit nur sichergestellt ist, daß die Umlaufbewegung des Körpers (112) zum Antrieb der Walze (118) herangezogen wird, die dabei mit größerer Drehzahl umläuft.

Bei dem in Fig. 4 gezeigten dritten Ausführungsbeispiel sind aus den genannten Gründen für gleiche Teile um 200 größere Bezugszeichen vewendet. Bei diesem Ausführungsbeispiel ist die Walze (218) in bezug auf die Längsmittelachse (216) des Körpers (212) bedarfsweise auch noch radial verstellbar. Hierzu ist der radiale Tragteil (231) dadurch verstellbar ausgebildet, daß er aus zwei relativ zueinander verschiebbaren Einzeltragteilen (270,271) gebildet ist, die in der jeweiligen Relativstellung festlegbar sind. Hierzu enthält z.B. der Einzeltragteil (271) ein Langloch (272), in das zumindest eine am anderen Einzeltragteil (270) sitzende Schraube (273) eingreift.

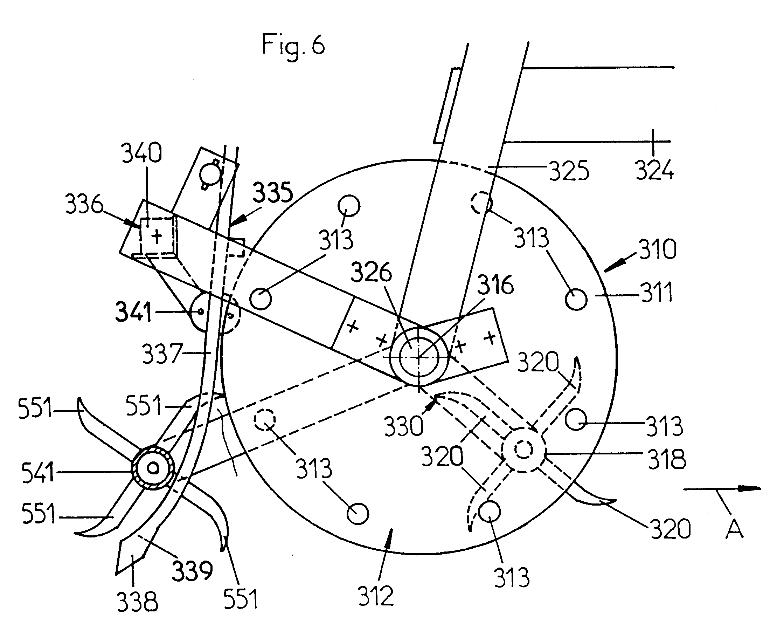

Fig. 6 zeigt ein viertes Ausführungsbeispiel der Erfindung. Bei diesem Ausführungsbeispiel sind auch aus den oben genannten Gründen für gleiche Teile um 300 größere Bezugszeichen verwendet. Bei diesem Ausführungsbeispiel erstreckt sich der Rahmen (336) mit den daran gehaltenen nach hinten abgebogenen Saatrohren (337) in einer Position, bei der die Saatrohre (337) in Arbeitsrichtung (Pfeil A) hinter dem Körper (312) und dabei aber vor der Walze (541), mithin im Bereich zwischen dieser und dem Körper (312), angeordnet sind. Die vorstehenden Mitnehmer (551) der Walze (541) greifen somit durch die zwischen den einzelnen Saatrohren (337) vorhandenen Zwischenraumbereiche (339).

Bei diesem Ausführungsbeispiel kann weiter vorgesehen sein, daß der Halterahmen (336) mit einer Schnellbefestigungsvorrichtung versehen ist, mittels welcher der Halterahmen (336) an der walzenförmigen Vorrichtung (310,311,541) angebracht und in verschiedenen Positionen gehalten werden kann. Diese Schnellbefestigungsvorrichtung dient dazu, den Halterahmen (336) an der walzenförmigen Vorrichtung (310,311,541) wahlweise in der einen Position gemäß Fig. 1 zu halten, in der die Saatrohre (337) dem Körper (312) in Arbeitsrichtung gemäß Pfeil A vorgelagert sind, oder statt dessen in der Position gemäß Fig. 6 zu halten.

Die Mitnehmer (551) der Walze (541) sind vorzugsweise aus elastisch federndem und nachgiebigem Material gebildet. Sie sind auch so bemessen, daß sie den vorgeschalteten Körper (312) bei der Umlaufbewegung reinigen.

## Patentansprüche

1. Vorrichtung zur landwirtschaftlichen Bodenbearbeitung mit einer Saatrohre (37; 337) aufweisenden Saateinbringeinrichtung (35; 335) und mit einer quer zur Arbeitsrichtung (A) verlaufenden, mit rotierenden, vorstehenden Mitnehmern (20; 551) versehenen walzenförmigen Vorrichtung (10, 11, 18; 310, 311, 541), deren vorstehende Mitnehmer (20; 511) durch die zwischen den einzelnen Saatrohren (37; 337) vorhandenen Zwischenraumbereiche (39; 339) durchgreifen und direkt an den Saatrohren (37; 337) vorbeilaufen, wobei
a. jedes, vorzugsweise jedes einzelne, Saatrohr (37; 337) zur Höhenbewegung seines unteren Endes gegen die Wirkung einer Federeinrichtung (42, 51) ausweichbar, vorzugsweise schwenkbar, gehalten ist, und
b. jedes einzelne Saatrohr (37; 337) -bezogen auf die Arbeitsrichtung (A)- in seinem unteren Bereich stark schräg nach hinten unten verläuft.

2. Vorrichtung zur landwirtschaftlichen Bodenbearbeitung nach Anspruch 1, dadurch gekennzeichnet, dass jedes, vorzugsweise jedes einzelne, Saatrohr (37; 337) im Bereich der walzenförmigen Vorrichtung (10, 11, 18; 310, 311, 541) ausweichbar, vorzugsweise schwenkbar, gehalten ist.

3. Vorrichtung zur landwirtschaftlichen Bodenbearbeitung nach Anspruch 1 oder 2, dadurch gekennzeichnet, dass jedes, vorzugsweise jedes einzelne, Saatrohr (37; 337) mittels eines zur Längsrichtung der walzenförmigen Vorrichtung (10, 11, 18; 310, 311, 541) zumindest etwa parallelen Gelenkes (41; 341) schwenkbar gehalten ist.

4. Vorrichtung zur landwirtschaftlichen Bodenbearbeitung nach Anspruch 3, dadurch gekennzeichnet, dass sich das Gelenk (41; 341) etwa in Höhe einer Drehlängsachse (16; 316) der walzenförmigen Vorrichtung (10, 11, 18; 310, 311, 541) erstreckt.

5. Vorrichtung zur landwirtschaftlichen Bodenbearbeitung nach mindestens einem der Ansprüche 1 bis 4, dadurch gekennzeichnet, dass die jedem, vorzugsweise jedem einzelnen, Saatrohr (37; 337) zugeordnete Federeinrichtung (42, 51) eine Zugfeder (42) aufweist.

6. Vorrichtung zur landwirtschaftlichen Bodenbearbeitung nach mindestens einem der Ansprüche 1 bis 5, dadurch gekennzeichnet, dass die Saatrohre (37; 337) an der Halterung (24, 25, 26; 324, 325, 326) der walzenförmigen Vorrichtung (10, 11, 18; 310, 311, 541) mittelbar gehalten sind.

7. Vorrichtung zur landwirtschaftlichen Bodenbearbeitung nach mindestens einem der Ansprüche 1 bis 6, dadurch gekennzeichnet, dass die Saateinbringeinrichtung (35; 335) einen Halterahmen (36; 336) aufweist, und dass jedes, vorzugsweise jedes einzelne, Saatrohr (37; 337) am Halterahmen (36; 336) gegen die Wirkung einer Feder (42) ausweichbar, vorzugsweise schwenkbar, gehalten ist.

8. Vorrichtung zur landwirtchaftlichen Bodenbearbeitung nach mindestens einem der Ansprüche 1 bis 7, dadurch gekennzeichnet, dass jedes einzelne Saatrohr (33; 337) an seinem unteren Ende mit einem Schar (38; 338) versehen ist.

9. Vorrichtung zur landwirtschaftlichen Bodenbearbeitung nach mindestens einem der Ansprüche 1 bis 8, dadurch gekennzeichnet, dass die walzenförmige Vorrichtung (10, 11, 18; 310, 311 541) zur Höhenführung der Saateinbringeinrichtung (35; 335) ausgebildet ist.

10. Vorrichtung zur landwirtschaftlichen Bodenbearbeitung nach Anspruch 9, dadurch gekennzeichnet, dass die Saateinbringeinrichtung (35) gegenüber der walzenförmigen Vorrichtung (10, 11, 18) mittels einer Verstelleinrichtung (44) höhenverstellbar ist.

11. Vorrichtung zur landwirtschaftlichen Bodenbearbeitung nach mindestens einem der Ansprüche 1 bis 10, dadurch gekennzeichnet, dass die Mitnehmer (20; 551) entlang der walzenförmigen Vorrichtung (10, 11, 18; 310, 311, 541) in gleich grossen Abständen aufeinanderfolgen.

12. Vorrichtung zur landwirtschaftlichen Bodenbearbeitung nach mindestens einem der Ansprüche 1 bis 11, dadurch gekennzeichnet, dass je Axialbereich an der walzenförmigen Vorrichtung (10, 11, 18; 310, 311, 541) mehrere Mitnehmer (20; 551) angeordnet sind.

13. Vorrichtung zur landwirtschaftlichen Bodenbearbeitung nach Anspruch 12, dadurch gekennzeichnet, dass je Axialbereich, die Mitnehmer (20; 551) sich in einer gemeinsamen Radialebene erstecken.

14. Vorrichtung zur landwirtschaftlichen Bodenbearbeitung nach Anspruch 12 oder 13, dadurch gekennzeichnet, dass je Axialbereich, die Mitnehmer (20; 551) in Umfangsrichtung in gleich grossen Winkelabständen aufeinanderfolgen.

15. Vorrichtung zur landwirtschaftlichen Bodenbearbeitung nach Anspruch 12, 13 oder 14, dadurch gekennzeichnet, dass je Axialbereich, die Mitnehmer (20; 551) zu einem Mitnehmerrad zusammengefasst sind.

16. Vorrichtung zur landwirtschaftlichen Bodenbearbeitung nach mindestens einem der Ansprüche 1 bis 15, dadurch gekennzeichnet, dass, in Längsrichtung der walzenförmigen Vorrichtung (10, 11, 18; 310, 311, 541) gesehen, die entsprechende Mitnehmer (20; 551) in zwei aufeinanderfolgende Axialbereiche der walzenförmigen Vorrichtung (10, 11, 18; 310, 311, 541) gegeneinander versetzt sind.

17. Vorrichtung zur landwirtschaftlichen Bodenbearbeitung nach mindestens einem der Anprüche 1 bis 16, dadurch gekennzeichnet, dass die Mitnehmer (20; 551) je einen Endabschnitt (23) aufweisen, der entgegen ihre Umlaufrichtung gerichtet ist.

18. Vorrichtung zur landwirtschaftlichen Bodenbearbeitung nach Anspruch 17, dadurch gekennzeichnet, dass die Mitnehmer (20; 551) gegen ihre Umlaufrichtung gekröpft, gebogen oder abgewinkelt sind.

19. Vorrichtung zur landwirtschaftlichen Bodenbearbeitung nach Anspruch 18, dadurch gekennzeichnet, dass die Mitnehmer (20; 551) je einen inneren Abschnitt (22) und einen an diesen Abschnitt (22) anschliessenden, demgegenüber entgegen der Umlaufrichtung der Mitnehmer (20; 551) unter einem stumpfen Winkel abgebogenen äusseren Endabschnitt (23) aufweisen.

20. Vorrichtung zur landwirtschaftlichen Bodenbearbeitung nach mindestens einem der Ansprüche 1 bis 19, dadurch gekennzeichnet, dass die Mitnehmer (20) derart rotieren, dass sie sich an der Vorderseite der walzenförmigen Vorrichtung (10, 11, 18) gegen den Boden bewegen.

21. Vorrichtung zur landwirtschaftlichen Bodenbearbeitung nach mindestens einem der Ansprüche 1 bis 20, dadurch gekennzeichnet, dass die Mitnehmer (20; 551) aus Metall oder Kunststoff gebildet sind.

22. Vorrichtung zur landwirtschaftlichen Bodenbearbeitung nach mindestens einem der Ansprüche 1 bis 21, dadurch gekennzeichnet, dass die Mitnehmer (20; 551) auf der Aussenseite mit einem elastischen Material, insbesondere mit Gummi oder Kunststoff, beschichtet sind.

23. Vorrichtung zur landwirtschaftlichen Bodenbearbeitung nach mindestens einem der Ansprüche 1 bis 22, dadurch gekennzeichnet, dass jeder Mitnehmer (20; 551) aus elastisch federndem Material gebildet und/oder an der walzenförmigen Vorrichtung (10, 11, 18; 310, 311, 541) federnd gehalten ist.

24. Vorrichtung zur landwirtschaftlichen Bodenbearbeitung nach mindestens einem der Ansprüche 1 bis 23, dadurch gekennzeichnet, dass die Mitnehmer (20; 551) als Zinken ausgebildet sind.

25. Vorrichtung zur landwirtschaftlichen Bodenbearbeitung nach mindestens einem der Ansprüche 1 bis 24, dadurch gekennzeichnet, dass die walzenförmige Vorrichtung (10, 11, 18; 310, 311, 541) eine die vorstehenden Mitnehmer (20; 551) haltende Walze (18; 541) aufweist.

26. Vorrichtung zur landwirtschaftlichen Bodenbearbeitung nach Anspruch 25, dadurch gekennzeichnet, dass die Saatrohre (37; 337) -bezogen auf die Arbeitsrichtung (A)- vor der Walze (18; 541) angeordnet sind.

27. Vorrichtung zur landwirtschaftlichen Bodenbearbeitung nach Anspruch 25 oder 26, dadurch gekennzeichnet, dass die Lage der Walze (18; 541) gegenüber der Saatrohre (37; 337) einstellbar ist.

## Claims

1. Device for agricultural soil working with a seed planting arrangement (35; 335) comprising seed tubes (37; 337) and with a roller-shaped device (10, 11, 18; 310, 311, 541) extending transversely to the working direction (A) and equipped with rotating projecting entrainment means (20; 551) which engage through the interspace areas (39; 339) present between the individual seed tubes (37; 337) and pass directly in the vicinity of the seed tubes (37; 337), wherein:
a. each, preferably each individual, seed tube (37; 337) is mounted deflectably, preferably pivotably, for upward movement of its lower end against the action of a spring arrangement (42, 51), and
b. each individual seed tube (37; 337) in its lower area runs strongly obliquely rearwards in relation to the working direction (A) and downwards.

2. Device for agricultural soil working according to claim 1, characterised in that each, preferably each individual, seed tube (37; 337) is mounted deflectably, preferably pivotably, in the area of the roller-shaped device (10, 11, 18; 310, 311, 541).

3. Device for agricultural soil working according to claim 1 or 2, characterised in that each, preferably each individual, seed tube (37; 337) is mounted pivotably by mean of a joint (41;341) at least approximately parallel to the longitudinal direction of the roller-shaped device (10, 11, 18; 310, 311, 541).

4. Device for agricultural soil working according to claim 3, characterised in that the joint (41; 341) extends approximately level with a longitudinal axis of rotation (16; 316) of the roller-shaped device (10, 11,18; 310, 311, 541).

5. Device for agricultural soil working according to at least one of claims 1 to 4, characterised in that the spring arrangement (42, 51) associated with each, preferably each individual, seed tube (37; 337) exhibits a tension spring (42).

6. Device for agricultural soil working according to at least one of claims 1 to 5, characterised in that the seed tubes (37; 337) are mounted indirectly on the mounting (24, 25, 26; 324, 325, 326) of the roller-shaped device (10, 11, 18; 310, 311, 541).

7. Device for agricultural soil working according to at least one of claims 1 to 6, characterised in that the seed planting arrangement (35; 335) exhibits a mounting frame (36; 336) and in that each, preferably each individual, seed tube (37; 337) is mounted deflectably, preferably pivotably, on the mounting frame (36; 336) against the action of a spring (42).

8. Device for agricultural soil working according to at least one of claims 1 to 7, characterised in that each individual seed tube (37; 337) is provided with a coulter (38; 338) at its lower end.

9. Device for agricultural soil working according to at least one of claims 1 to 8, characterised in that the rollers-shaped device (10, 11, 18; 310, 311, 541) is designed for upward guidance of the seed planting arrangement (35; 335).

10. Device for agricultural soil working according to claim 9, characterised in that the seed planting arrangement (35) is upwardly adjustable in relation to the roller-shaped device (10, 11, 18) by means of an adjusting arrangement (44).

11. Device for agricultural soil working according to at least one of claims 1 to 10, characterised in that the entrainment means (20; 551) follow one another at equal intervals along the roller-shaped device (10, 11, 18; 310, 311, 541).

12. Device for agricultural soil working according to at least one of claims 1 to 11, characterised in that a plurality of entrainment means (20; 551) are disposed on the roller-shaped device (10, 11, 18; 310, 311, 541) in each axial area.

13. Device for agricultural soil working according to claim 12, characterised in that in each axial area the entrainment means (20; 551) extend in a common radial plane.

14. Device for agricultural soil working according to claim 12 or 13, characterised in that in each axial area the entrainment means (20; 551) follow one another at equal angular intervals in the circumferential direction.

15. Device for agricultural soil working according to claim 12, 13 or 14, characterised in that in each axial area the entrainment means (20; 551) are combined to form an entrainment wheel.

16. Device for agricultural soil working according to at least one of claims 1 to 15, characterised in that, when viewed in the longitudinal direction of the roller-shaped device (10, 11, 18; 310, 311, 541), the corresponding entrainment means (20; 551) in two successive axial areas of the roller-shaped device (10, 11, 18; 310, 311, 541) are offset in relation to one another.

17. Device for agricultural soil working according to at least one of claims 1 to 16, characterised in that the entrainment means (20; 551) each exhibit an end portion (23) which points counter to their direction of rotation.

18. Device for agricultural soil working according to claim 17, characterised in that the entrainment means (20; 551) are angled, curved or bent counter to their direction of rotation.

19. Device for agricultural soil working according to claim 18, characterised in that the entrainment means (20; 551) each exhibit an inner portion (22) and an outer end portion (23) adjoining this portion (22) and bent at a obtuse angle in relation to it counter to the direction of rotation of the entrainment means (20; 551).

20. Device for agricultural soil working according to at least one of claims 1 to 19, characterised in that the entrainment means (20) rotate such that they move towards the ground on the front side of the roller-shaped device (10, 11,18).

21. Device for agricultural soil working according to at least one of claims 1 to 20, characterised in that the entrainment means (20; 551) are made of metal or plastic.

22. Device for agricultural soil working according to at least one of claims 1 to 21, characterised in that the entrainment means (20; 551) are coated on the outside with an elastic material, in particular with rubber or plastic.

23. Device for agricultural soil working according to at least one of claims 1 to 22, characterised in that each entrainment means (20; 551) is made of elastically resilient material and/or is mounted resiliently on the roller-shaped device (10, 11, 18; 310, 311, 541).

24. Device for agricultural soil working according to at least one of claims 1 to 23, characterised in that the entrainment means (20; 551) are embodied as prongs.

25. Device for agricultural soil working according to at least one of claims 1 to 24, characterised in that the roller-shaped device (10, 11, 18; 310, 311, 541) exhibits a roller (18; 541) supporting the projecting entrainment means (20; 551).

26. Device for agricultural soil working according to claims 25, characterised in that the seed tubes (37; 337) are disposed in front of the roller (18; 541) in relation to the working direction (A).

27. Device for agricultural soil working according to claim 25 or 26, characterised in that the position of the roller (18; 541) in relation to the seed tubes (37; 337) is adjustable.

## Revendications

1. Dispositif agricole de travail du sol comportant un dispositif (35 ; 335) d'implantation de semence qui comprend des conduites de semis (37 ; 337), et un dispositif (10, 11, 18 ; 310, 311, 541) en forme de rouleau s'étendant transversalement à la direction de travail (A) et muni d'entraîneurs rotatifs (20 ; 551) proéminents lesquels s'étendent à travers les espaces (39 ; 339) existant entre les conduites de semis (37 ; 337) individuelles et passent directement à proximité desdites conduites de semis (37 ; 337), dispositif agricole de travail du sol dans lequel :
a) chaque conduite de semis (37 ; 337), préférentiellement chaque conduite de semis (33 ; 337) individuelle, est, en vue du déplacement en hauteur de son extrémité inférieure, supportée de manière à pouvoir se déplacer, de préférence par pivotement, à l'encontre de l'action d'un dispositif à ressort (42, 51), et
b) la partie inférieure de chaque conduite de semis (37 ; 337) individuelle s'étend - compte tenu du sens de travail (A) - de manière fortement inclinée vers l'arrière et vers le bas.

2. Dispositif agricole de travail du sol selon la revendication 1, caractérisé en ce que chaque conduite de semis (37 ; 337), préférentiellement chaque conduite de semis (33 ; 337) individuelle, est supportée dans le voisinage du dispositif (10, 11, 18 ; 310, 311, 541) en forme de rouleau, de manière à pouvoir se déplacer, de préférence par pivotement.

3. Dispositif de travail du sol selon la revendication 1 ou 2, caractérisé en ce que chaque conduite de semis (37 ; 337), préférentiellement chaque conte de semis (37 ; 337) individuelle est supportée de manière pivotante au moyen d'une articulation (41 ; 341) d'axe au moins sensiblement parallèle à la direction longitudinale du dispositif (10, 11,18 ; 310, 311, 541) en forme de rouleau.

4. Dispositif de travail du sol selon la revendication 3, caractérisé en ce que l'articulation (41; 341) s'étend sensiblement à hauteur d'un axe de rotation (16 ; 316) du dispositif (10, 11, 18 ; 310, 311, 541) en forme de rouleau.

5. Dispositif agricole de travail du sol selon l'une au moins des revendications 1 à 4, caractérisé en ce que le dispositif à ressort (42, 51) associé à chaque conduite de semis (37; 337), préférentiellement à chaque conduite de semis (37 ; 337) individuelle, comporte un ressort de traction (42).

6. Dispositif agricole de travail du sol selon l'une au moins des revendications 1 à 5, caractérisé en ce que les conduites de semis (37 ; 337) sont supportées indirectement par la structure porteuse (24, 25, 26 ; 324, 325, 326) du dispositif (10, 11, 18 ; 310, 311, 541) en forme de rouleau.

7. Dispositif agricole de travail du sol selon l'une au moins des revendications 1 à 6, caractérisé en ce que le dispositif (35 ; 335) d'implantation de semence comporte un châssis porteur (36 ; 336) et que chaque conduite de semis (37 ; 337), préférentiellement chaque conduite de semis (37 ; 337) individuelle, est supportée pu le châssis porteur (36 ; 336) de manière à pouvoir se déplacer, de préférence par pivotement, à l'encontre de l'action d'un ressort (42).

8. Dispositif agricole de travail du sol selon l'une au moins des revendications 1 à 7, caractérisé en ce que chaque conduite de semis (37 ; 337) individuelle est pourvue d'un soc (38 ; 338) à son extrémité inférieure.

9. Dispositif agricole de travail du sol selon l'une au moins des revendications 1 à 8, caractérisé en ce que le dispositif (10, 11, 18 ; 310, 311, 541) en forme de rouleau est réalisé de telle sorte à assurer le guidage en hauteur du dispositif (35 ; 335) d'implantation de semence.

10. Dispositif de travail du sol selon la revendication 9, caractérisé en ce que le dispositif (35) d'implantation de semence est réglable en hauteur par rapport au dispositif (10, 11, 18) en forme de rouleau au moyen d'un dispositif de réglage (44).

11. Dispositif agricole de travail du sol selon l'une au moins des revendications 1 à 10, caractérisé en ce que les entraîneurs (20 ; 551) sont implantés à intervalles réguliers les uns après les autres le long du dispositif (10, 11, 18 ; 310, 311, 541) en forme de rouleau.

12. Dispositif agricole de travail du sol selon l'une au moins des revendications 1 à 11, caractérisé en ce que plusieurs entraîneurs (20 ; 551) sont prévus dans chaque zone axiale du dispositif (10, 11, 18 ; 310, 311, 541) en forme de rouleau.

13. Dispositif de travail du sol selon la revendication 12, caractérisé en ce que dans chaque zone axiale, les entraîneurs (20 ; 551) s'étendent dans un plan radial commun.

14. Dispositif agricole de travail du sol selon la revendication 12 ou 13, caractérisé en ce que dans chaque zone axiale, les entraîneurs (20 ; 551) sont, en considérant la direction de rotation, séparés les uns des autres suivant des secteurs angulaires égaux.

15. Dispositif agricole de travail du sol selon la revendication 12, 13 ou 14, caractérisé en ce que dans chaque zone axiale, les entraîneurs (20 ; 551) sont réalisés sous forme d'une roue entraîneuse.

16. Dispositif agricole de travail du sol selon l'une au moins des revendications 1 à 15, caractérisé en ce qu'en vue suivant la direction longitudinale du dispositif (10, 11, 18 ; 310, 311, 541) en forme de rouleau, les entraîneurs (20 ; 551) respectifs de deux zones axiales consécutives dudit dispositif (10, 11, 18 ; 310, 311, 541) en forme de rouleau sont décalés l'un par rapport à l'autre.

17. Dispositif agricole de travail du sol selon l'une au moins des revendications 1 à 16, caractérisé en ce que les entraîneurs (20 ; 551) comportent chacun un tronçon d'extrémité (23) dirigé à l'encontre de leur direction de rotation.

18. Dispositif agricole de travail du sol selon la revendication 17, caractérisé en ce que les entraîneurs (20 ; 551) sont coudés, courbés ou pliés à l'encontre de leur direction de rotation.

19. Dispositif agricole de travail de sol selon la revendication 18, caractérise en ce que les entraîneurs (20 ; 551) présentent chacun un tronçon intérieur (22) et un tronçon d'extrémité (23) se raccordant à ce tronçon intérieur (22) et étant courbè par rapport à celui-ci suivant un angle obtus à l'encontre de la direction de rotation des entraîneurs (20 ; 551).

20. Dispositif agricole de travail du sol selon l'une au moins des revendications 1 à 19, caractérisé en ce que les entraîneurs (20) tournent de telle sorte qu'à la partie frontale du dispositif (10, 11, 18) en forme de rouleau, ils se déplacent vert le sol.

21. Dispositif agricole de travail du sol selon l'une au moins des revendications 1 à 20, caractérisé en ce que les entraîneurs (20 ; 551) sont réalisés en métal ou en matière synthétique.

22. Dispositif agricole de travail du sol selon l'une au moins des revendications 1 à 21 ; caractérisé en ce que les entraîneurs (20 ; 551) sont recouverts extérieurement d'une matière élastique, en particulier de caoutchouc ou de matière synthétique.

23. Dispositif agricole de travail du sol selon l'une au moins des revendications 1 à 22, caractérisé en ce que chaque entraîneur (20 ; 551) est réalisé dans un matériau élastique et/ou est lié de manière élastique au dispositif (10, 11, 18 ; 310,318,541) en forme de rouleau.

24. Dispositif agricole de travail du sol selon l'une au moins des revendications 1 à 23, caractérisé en ce que les entraîneurs (20 ; 551) sont réalisés sous forme de dents.

25. Dispositif agricole de travail du sol selon l'une au moins des revendications 1 à 24, caractérisé en ce que le dispositif (10, 11, 18 ; 310, 311, 541) en forme de rouleau comporte un rouleau (18 ; 541) portant les entraîneurs (20 ; 551) proéminents.

26. Dispositif agricole de travail du sol selon la revendication 25, caractérisé en ce que les conduites de semis (37 ; 337) sont, compte tenu du sens de travail (A), implantées devant le rouleau (18 ; 541).

27. Dispositif agricole de travail du sol selon la revendication 25 ou 26, caractérisé en ce que la position du rouleau (18 ; 541) est réglable par rapport aux conduites de semis (37 ; 337).
